# EUROPEAN PATENT APPLICATION

(11) **EP 4 096 262 A1**
(43) Date of publication of application: **30.11.2022**
(21) Application number: 20916223.9
(22) Date of filing: 24.01.2020
(51) Int. Cl.: H04W 8/24, H04W 52/30

(54) **TERMINAL, BASE STATION, AND COMMUNICATION METHOD**

(71) Applicant: NTT DOCOMO, INC., Chiyoda-Ku Tokyo 100-6150 (JP)
(72) Inventor: TAKAHASHI, Hideaki, Tokyo 100-6150 (JP); UMEDA, Hiromasa, Tokyo 100-6150 (JP); OGUMA, Yuta, Tokyo 100-6150 (JP)
(74) Representative: Hoffmann Eitle
(86) International application number: PCT/JP2020/002549
(87) International publication number: WO 2021/149246

(57) **Abstract**

A terminal includes a receiving unit configured to receive, from a base station, information for indicating one or a plurality of values indicating requirements related to spectrum emission in a frequency band and information for requesting a report of a terminal capability, a control unit configured to support all values indicating the requirements related to the spectrum emission, in a case where the report does not include information indicating whether an operation of changed MPR (Maximum Power Reduction) in the frequency band is supported, and a transmitting unit configured to transmit the report to the base station.

## Description

### Technical Field

The present invention relates to a terminal, a base station, and a communication method in a wireless communication system.

### Background Art

In NR (New Radio) (also referred to as "5G"), which is the successor system of LTE (Long Term Evolution), techniques for satisfying, as required conditions, a large capacity system, high data transmission speed, low latency, and simultaneous connection of many terminals, low cost, power saving, and the like are being discussed. (for example, Non-Patent Document 1).

In an LTE system or NR system, a network transmits an inquiry to UE (User Equipment) to obtain information of radio access capability of the UE (for example, Non-Patent Document 2). The radio access capability of the UE includes, for example, the maximum supported data rate, total layer 2 buffer size, a supported band combination, a parameter related to a PDCP (Packet Data Convergence Protocol) layer, a parameter related to an RLC (Radio Link Control) layer, a parameter related to a MAC (Medium Access Control) layer, a parameter related to a physical layer, or the like (for example, Non-Patent Document 3, Non-Patent Document 4, and Non-Patent Document 5).

### Prior Art Document

### Non-Patent Document

Non-Patent Document 1: 3GPP TS 38.300 V15.8.0 (2019-12)
Non-Patent Document 2: 3GPP TS 38.311 V15.8.0 (2019-12)
Non-Patent Document 3: 3GPP TS 38.101-1 V15.8.2 (2019-12)
Non-Patent Document 4: 3GPP TS 38.101-2 V15.8.0 (2019-12)
Non-Patent Document 5: 3GPP TS 38.101-3 V15.8.0 (2019-12)

### Summary of the Invention

### Problem to be Solved by the Invention

In the conventional technique, in a case where information element indicating a capability related to MPR (Maximum Power Reduction) is not configured for a certain frequency band when a network obtains information about radio access capabilities of UE, the network cannot identify the capabilities of the terminal for that frequency band.

The present invention has been made in view of the above problems, and it is an object of the present invention to enable a network to identify the terminal capability in a radio communication system.

### Means for Solving Problem

According to the disclosed technique, provided is a terminal including a receiving unit configured to receive, from a base station, information for indicating one or a plurality of values indicating requirements related to spectrum emission in a frequency band and information for requesting a report of a terminal capability, a control unit configured to support all values indicating the requirements related to the spectrum emission, in a case where the report does not include information indicating whether an operation of changed MPR (Maximum Power Reduction) in the frequency band is supported, and a transmitting unit configured to transmit the report to the base station.

### Effect of the Invention

According to the disclosed technique, a network can identify the terminal capability in a radio communication system.

### Brief Description of Drawings

FIG. 1 is a drawing illustrating a configuration example of a network architecture according to an embodiment of the present invention;
FIG. 2 is a drawing illustrating a configuration example of a radio communication system according to an embodiment of the present invention;
FIG. 3 is a sequence diagram for explaining an example of a terminal capability report according to an embodiment of the present invention;
FIG. 4 is a drawing illustrating an example (1) of parameters related to spectrum emission according to an embodiment of the present invention;
FIG. 5 is a drawing illustrating an example (2) of parameters related to spectrum emission according to an embodiment of the present invention;
FIG. 6 is a drawing illustrating an example (3) of parameters related to spectrum emission according to an embodiment of the present invention;
FIG. 7 is a drawing illustrating an example (4) of parameters related to spectrum emission according to an embodiment of the present invention;
FIG. 8 is a drawing illustrating an example (5) of parameters related to spectrum emission according to an embodiment of the present invention;
FIG. 9 is a drawing illustrating an example (6) of parameters related to spectrum emission according to an embodiment of the present invention;
FIG. 10 is a drawing illustrating an example (1) of parameters related to a terminal capability report according to an embodiment of the present invention;
FIG. 11 is a drawing illustrating an example (2) of parameters related to a terminal capability report according to an embodiment of the present invention;
FIG. 12 is a drawing illustrating an example of change of specifications related to a terminal capability report according to an embodiment of the present invention;
FIG. 13 is a drawing illustrating an example of a functional configuration of a base station 10 according to an embodiment of the present invention;
FIG. 14 is a drawing illustrating an example of a functional configuration of a terminal 20 according to an embodiment of the present invention; and
FIG. 15 is a drawing illustrating an example of a hardware configuration of the base station 10 or the terminal 20 according to an embodiment of the present invention.

### Mode for Carrying Out the Invention

Embodiments of the present invention will be hereinafter described with reference to drawings. The embodiments described below are examples, and the embodiments to which the present invention is applied are not limited to the following embodiments.

In operation of a wireless communication system according to embodiments of the present invention, existing techniques are used as appropriate. However, an example of existing technique includes an existing LTE, but is not limited to the existing LTE. In addition, the term "LTE" used in this specification has a broad meaning including LTE-Advanced and specifications newer than LTE-Advanced (e.g., NR) unless otherwise specified.

In the embodiments of the present invention described below, terms such as SS (Synchronization signal), PSS (Primary SS), SSS (Secondary SS), PBCH (Physical broadcast channel), PRACH (Physical random access channel), and the like used in the existing LTE are used. This is for convenience of description, and signals, functions, and the like may be referred to as other names. In NR, the above terms correspond to NR-SS, NR-PSS, NR-SSS, NR-PBCH, NR-PRACH, and the like. However, even when signals are used for NR, "NR-" is not necesarily attached thereto.

In the embodiments of the present invention, the duplex method may be a TDD (Time Division Duplex) system, an FDD (Frequency Division Duplex) system, or others (for example, Flexible Duplex and the like).

Further, in the embodiment of the present invention, "to configure" a radio parameter or the like may mean that a predetermined value is configured in advance (Pre-configure), or that a radio parameter indicated by a base station 10 or a terminal 20 is configured.

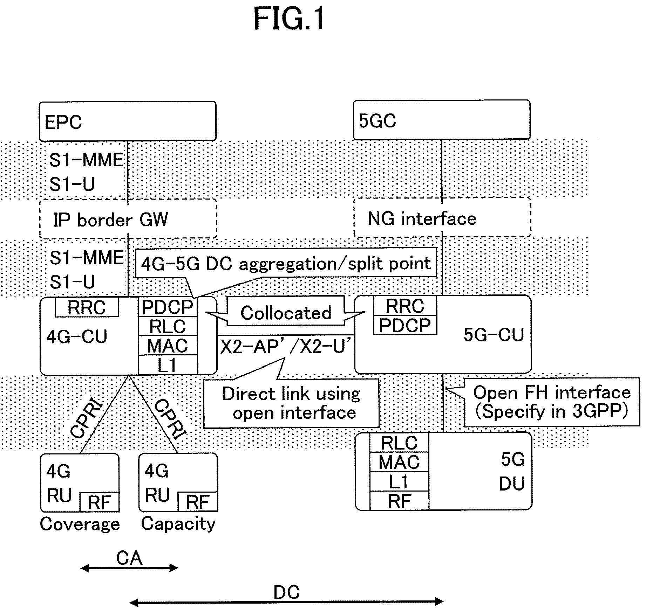

FIG. 1 is a figure illustrating a configuration example of a network architecture according to an embodiment of the present invention. As illustrated in FIG. 1, a radio network architecture according to an embodiment of the present invention includes a 4G-CU, a 4G-RU (Remote Unit, remote radio station), an EPC (Evolved Packet Core), and the like at the LTE-Advanced side. The radio network architecture according to an embodiment of the present invention includes a 5G-CU, a 5G-DU, and the like at the 5G side.

As illustrated in FIG. 1, the 4G-CU includes layers of RRC (Radio Resource Control), PDCP (Packet Data Convergence Protocol), RLC (Radio Link Control), MAC (Medium Access Control), and L1 (layer 1, PHY layer or a physical layer), and is connected to a CPRI (Common Public Radio Interface) to a 4G-RU. A network node including the 4G-CU and the 4G-RU is referred to as an eNB.

At the 5G side, as illustrated in FIG. 1, a 5G-CU includes an RRC layer, and is connected to a 5G-DU via an FH (Flonthaul) interface, and is connected to a 5GC (5G Core Network) via an NG interface (NG interface). Also, the 5G-CU is connected to the 4G-CU via an X2 interface. The PDCP layer of the 4G-CU serves as a joining or separation point in a case of performing 4G-5G DC (Dual Connectivity), i.e., EN-DC (E-UTRA-NR Dual Connectivity). A network node including the 5G-CU and the 5G-DU is referred to as a gNB. The 5G-CU may be referred to as a gNB-CU, and the 5G-DU may be referred to as a gNB-DU.

Also, as illustrated in FIG. 1, CA (Carrier Aggregation) between 4G-RUs is performed, and DC is performed between the 4G-RU and the 5G-DU. Although not illustrated, the UE (User Equipment) is wirelessly connected via the RF of the 4G-RU or the 5G-DU to transmit and receive packets.

It should be noted that FIG. 1 illustrates a radio network architecture during the DC of the LTE-NR, i.e., the EN-DC (E-UTRA-NR Dual Connectivity). However, in a case where the 4G-CU is separated into CU-DU, or NR standalone operation is performed, a similar radio network architecture may also be used. In the case where the 4G-CU is separated into CU-DU, the functions related to the RRC layer and the PDCP layer may be moved to the 4G-CU, and the RLC layer and lower layers may be included in the 4G-DU. It should be noted that, by separating the CU and the DU, the data rate of the CPRI may become reduced.

It should be noted that multiple 5G-DUs may be connected to the 5G-CU. When the UE connects to multiple 5G-CUs, a NR-DC (NR-NR Dual Connectivity) may be performed, and when the UE connects to multiple 5G-DUs and a single 5G-CU, the NR-DC may be performed. Note that the 5G-CU may be directly connected to an EPC without going through the 4G-CU, and 4G-CU may be directly connected to a 5GC without going through the 5G-CU.

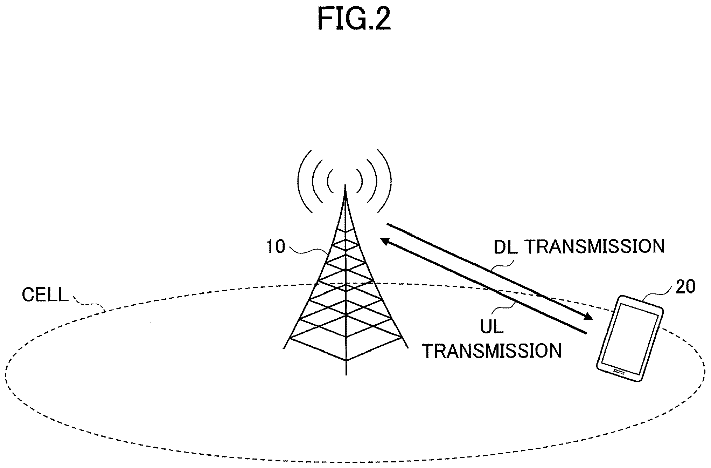

FIG. 2 is a drawing for explaining a radio communication system according to an embodiment of the present invention. As illustrated in FIG. 2, the radio communication system according to an embodiment of the present invention includes a base station 10 and a terminal 20. In FIG. 2, one base station 10 and one terminal 20 are illustrated, but this is only an example. Alternatively, a plurality of base stations 10 and terminals 20 may be provided.

The base station 10 provides one or more cells, and is a communication apparatus wirelessly communicating with the terminal 20. The physical resource of a radio signal is defined in the time domain and the frequency domain. The time domain may be defined by an OFDM (Orthogonal Frequency Division Multiplexing) symbol number. The frequency domain may be defined by the number of subcarriers or the number of resource blocks. The base station 10 transmits a synchronization signal and system information to the terminal 20. The synchronization signal is, for example, NR-PSS and NR-SSS. The system information is transmitted in, for example, NR-PBCH, and is also referred to as broadcast information. As illustrated in FIG. 2, the base station 10 transmits a control signal or data to the terminal 20 through DL (Downlink), and receives a control signal or data from the terminal 20 through UL (Uplink). Both the base station 10 and the terminal 20 can transmit and receive signals by performing beamforming. Both of the base station 10 and the terminal 20 can apply communication based on MIMO (Multiple Input Multiple Output) to DL or UL. Also, both of the base station 10 and the terminal 20 may perform communication via a secondary cell (SCell) with CA (Carrier Aggregation) and a primary cell (PCell).

The terminal 20 is a communication apparatus equipped with a wireless communication function such as a smartphone, a mobile phone, a tablet, a wearable terminal, and a communication module for M2M (Machine-to-Machine). As illustrated in FIG. 2, the terminal 20 receives control signals or data from the base station 10 in DL, and transmits control signals or data to the base station 10 in UL, thereby using various communication services provided by the wireless communication system.

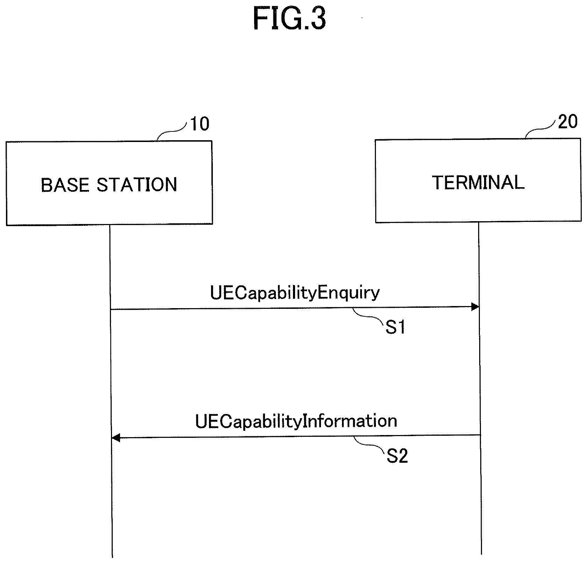

FIG. 3 is a sequence diagram for explaining an example of a terminal capability report according to an embodiment of the present invention. In step S1 illustrated in FIG. 3, the base station 10 transmits "UECapabilityEnquiry", i.e., an inquiry of UE capability to the terminal 20. In step S2 subsequent thereto, the terminal 20 transmits "UECapabilityInformation", i.e., a report of UE capability to the base station 10. The "UECapabilityInformation" includes the UE capability supported by the terminal 20. The base station 10 identifies the supported UE capability based on the received "UECapabilityInformation".

For example, the "UECapabilityInformation" includes an information element "RF-Parameters" used to indicate the capability related to the radio communication. The "RF-Parameters" includes an information element "modifiedMPR-Behaviour" indicating a capability related to MPR (Maximum Power Reduction). The "modifiedMPR-Behaviour" is a bitmap indicating, in a case where the MPR is introduced or changed in the future, which specification is supported. For example, a leftmost bit of the "modifiedMPR-Behaviour" configured for a certain frequency band corresponds to a first specification for that frequency band, and a subsequent bit corresponds to the second specification for that frequency band.

However, in a case where "modifiedMPR-Behaviour" is not configured for a certain frequency band, the base station 10 cannot identify the capability of the terminal 20 for that frequency band.

Therefore, in a case where "modifiedMPR-Behaviour" is not configured for a certain frequency band, the capability of the terminal 20 for that frequency band will be specified.

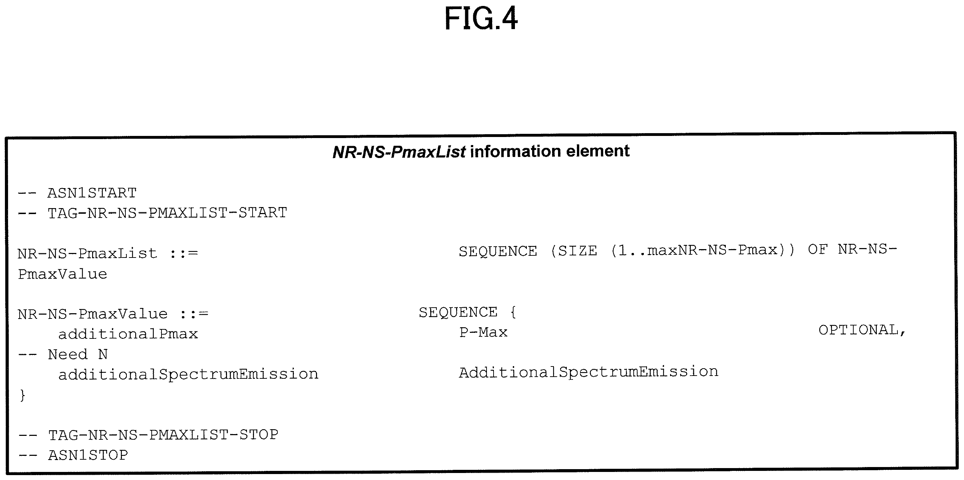

FIG. 4 is a drawing illustrating an example (1) of a parameter related to spectrum emission according to an embodiment of the present invention. With an information element "AdditionalSpectrumEmission" illustrated in FIG. 4, the limitation related to the spectrum emission of the UL transmission is indicated by the base station 10 to the terminal 20.

The "AdditionalSpectrumEmission" illustrated in FIG. 4 is included in "NR-NS-PmaxList". Further, the "NR-NS-PmaxList" is included in "MultiFrequencyBandListNR-SIB". Further, "MultiFrequencyBandListNR-SIB" is included in "FrequencyInfoUL-SIB". Further, "FrequencyInfoUL-SIB" is included in "UplinkConfigCommonSIB". Further, "UplinkConfigCommonSIB" is included in "ServingCellConfigCommonSIB". Further, "ServingCellConfigCommonSIB" is included in "SIB1". The "SIB1" is one set of the broadcast information sets transmitted from the base station 10 to the terminal 20. It should be noted that "AdditionalSpectrumEmission" may be transmitted from the base station 10 to the terminal 20 via "SIB2" or "SIB4", i.e., broadcast information. The "AdditionalSpectrumEmission" may be indicated for each frequency, or may be indicated for each frequency band.

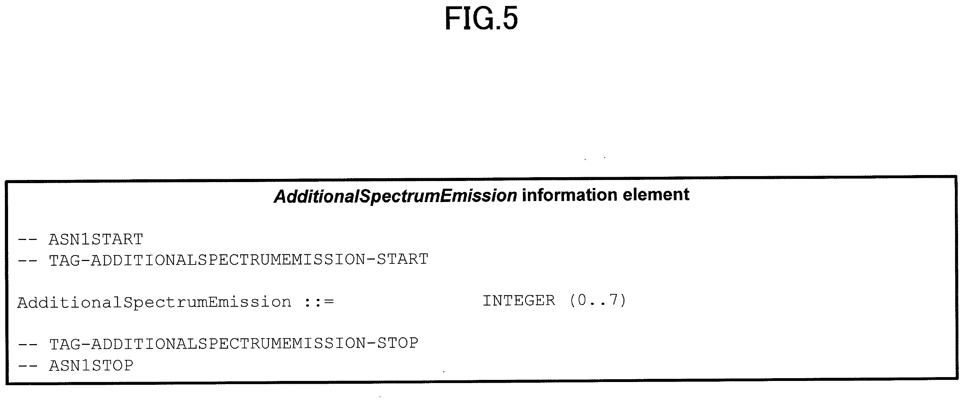

FIG. 5 is a drawing illustrating an example (2) of parameters related to spectrum emission according to an embodiment of the present invention. As illustrated in FIG. 5, the information element "AdditionalSpectrumEmission" can be set to an integer value from zero to seven.

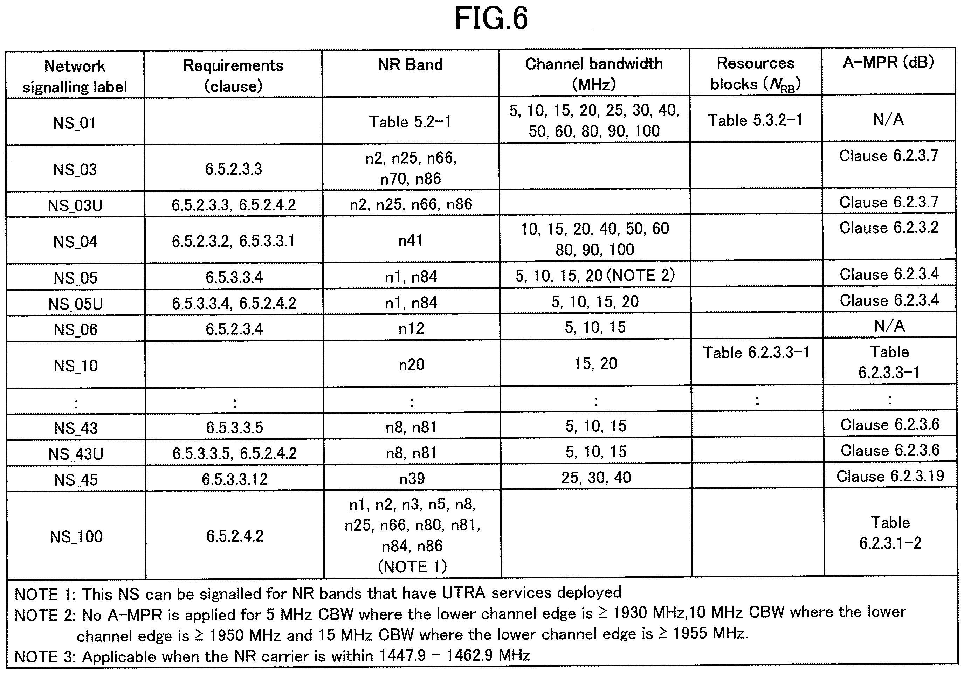

FIG. 6 is a drawing illustrating an example (3) of parameters related to spectrum emission according to an embodiment of the present invention. In a FR1 (Frequency Range 1), the terminal 20 obtains requirements related to spectrum emission via "Network signalling label" indicated by the network. For example, in a case where "Network signalling label" is "NS 04", the requirements in the row of "NS 04" illustrated in FIG. 6 are applied, the NR band includes "n41", the channel bandwidth includes "10, 15, 20, 40, 50, 60, 80, 90, 100", and A-MPR (additional MPR) and the like are configured. Hereinafter, the "Network signalling label" is also referred to as "NS value".

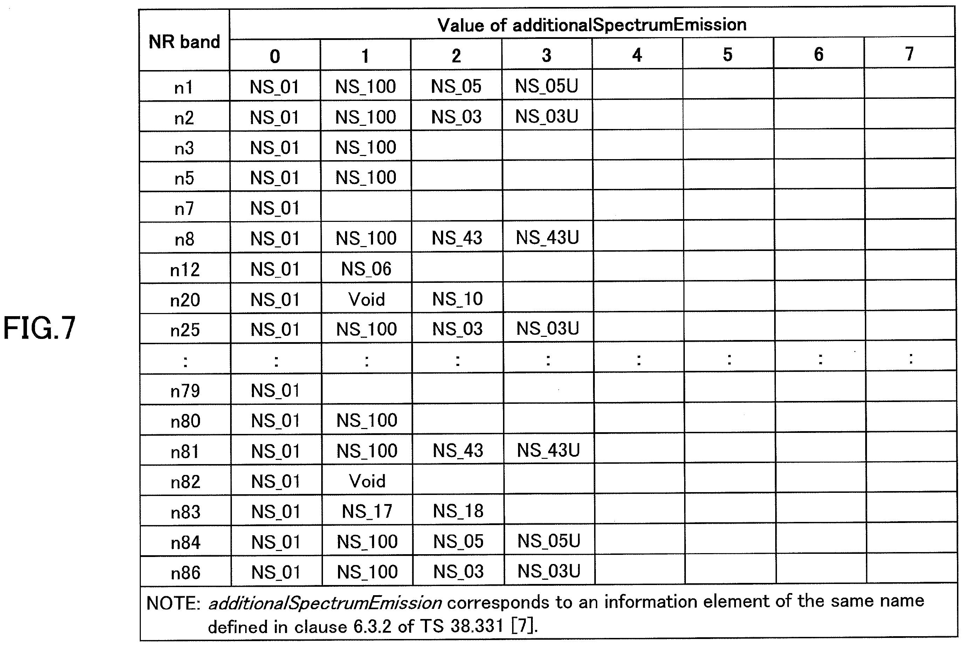

FIG. 7 is a drawing illustrating an example (4) of parameters related to spectrum emission according to an embodiment of the present invention. In the FR1, the "Network signalling label" illustrated in FIG. 6, is identified from: a value indicated by the information element "AdditionalSpectrumEmission"; and a mapping between the NR band and the value of the "AdditionalSpectrumEmission", illustrated in FIG. 7. For example, in the case of the band "n1", "NS 01" is mapped to the value 0, "NS 100" is mapped to the value 1, "NS_05" is mapped to the value 2, and "NS_05U" is mapped to the value 3. For example, in the case of the band "n83", "NS_01" is mapped to the value 0, "NS_17" is mapped to the value 1, and "NS_18" is mapped to the value 3. In other words, applied "Network signalling label" is indicated by "AdditionalSpectrumEmission".

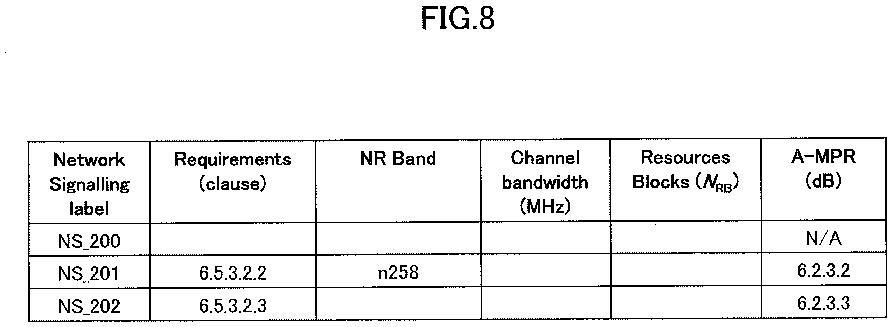

FIG. 8 is a drawing illustrating an example (5) of parameters related to spectrum emission according to an embodiment of the present invention. In a FR2 (Frequency Range 2), the terminal 20 obtains requirements related to spectrum emission via "Network signalling label" indicated by the network. For example, in a case where the "Network signalling label" is "NS_201", the requirements in the row of "NS _201" illustrated in FIG. 8 is applied, the NR band includes "n258", and the A-MPR, and the like are configured.

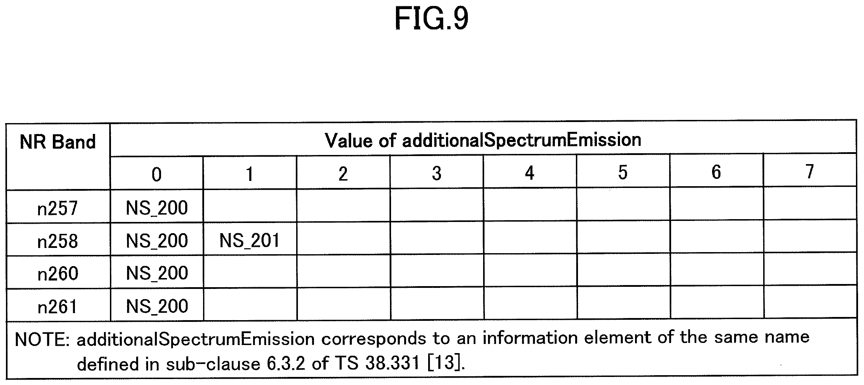

FIG. 9 is a drawing illustrating an example (6) of parameters related to spectrum emission according to an embodiment of the present invention. In the FR2, the "Network signalling label" illustrated in FIG. 8 is identified from: a value indicated by the information element "AdditionalSpectrumEmission"; and a mapping between the NR band and the value of the "AdditionalSpectrumEmission", illustrated in FIG. 9. For example, in the case of the band "n258","NS_200" is mapped to the value 0, and "NS 201" is mapped to the value 1.

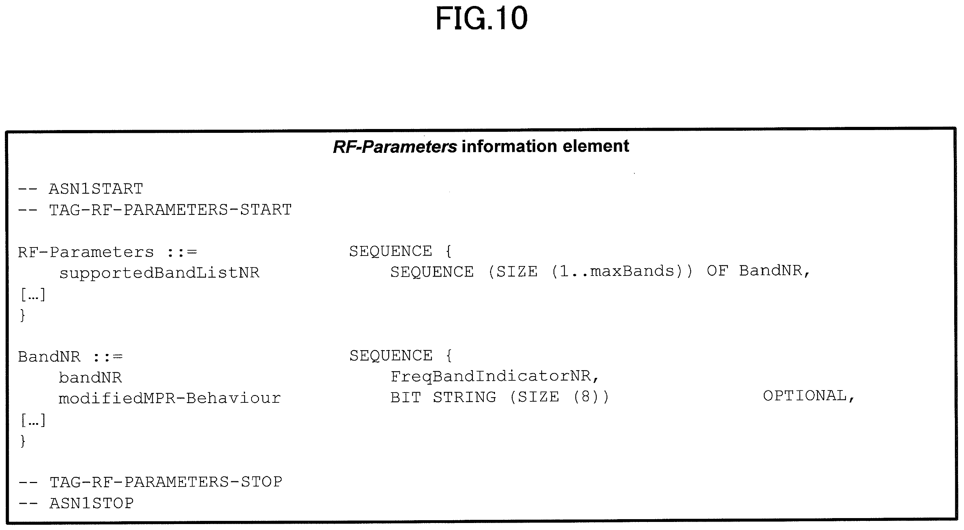

FIG. 10 is a drawing illustrating an example (1) of parameters related to a terminal capability report according to an embodiment of the present invention. As illustrated in FIG. 10, "modifiedMPR-Behaviour" associated with the frequency band indicated by the "FreqBandIndicatorNR", includes, for example, a bitmap of eight bits. With the "modifiedMPR-Behaviour", an MPR or A-MPR for a certain frequency band is specified. Note that "RF-Parameters" is an information element for indicating the terminal capability to the base station 10, and is included in the "UE-NR-Capability". The "UE-NR-Capability" is further included in "UECapabilityInformation", and, as illustrated in FIG. 3, is reported from the terminal 20 to the base station 10.

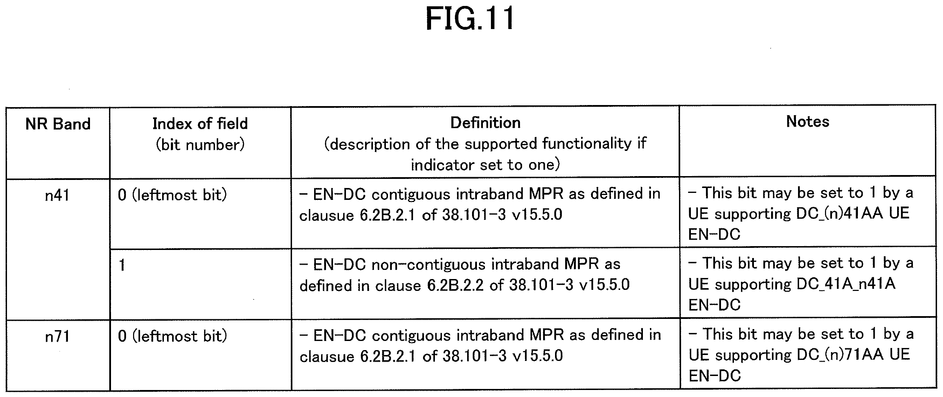

FIG. 11 is a drawing illustrating an example (2) of parameters related to a terminal capability report according to an embodiment of the present invention. FIG. 11 is an example of indicating, with a bitmap, a specification of MPR for a certain frequency band via the "modifiedMPR-Behaviour".

For example, as illustrated in FIG. 11, in a case where the frequency band is "n41", the leftmost bit of the bitmap indicates whether a specification related to EN-DC contiguous intraband MPR is supported. In a case where the frequency band is "n41", a bit subsequent to the leftmost bit of the bitmap, indicates whether a specification related to EN-DC non-contiguous intraband MPR is supported. As illustrated in FIG. 11, in a case where the frequency band is "n71", the leftmost bit of the bitmap indicates whether a specification related to EN-DC contiguous intraband MPR is supported. Note that, with respect to the bit included in the bitmap, a value of "1" may be defined as a value indicating that the specification is supported, and a value of "0" may be defined as a value indicating that the specification is not supported.

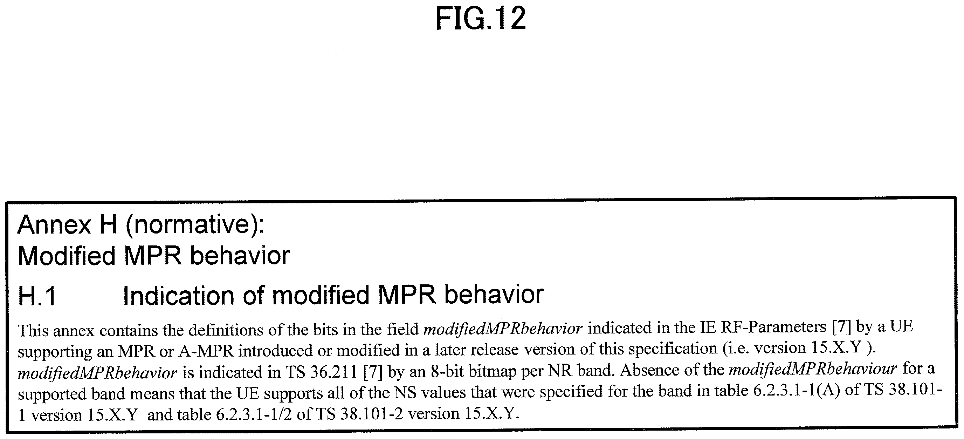

FIG. 12 is a drawing illustrating an example of a specification change related to a terminal capability report according to an embodiment of the present invention. As illustrated in FIG. 12, "modifiedMPR-Behaviour" included in the "RF-Parameters" is used for an indication for a case where the MPR or A-MPR supported by the terminal 20, is introduced or changed in a future release version. As explained with reference to FIG. 10, the "modifiedMPR-Behaviour" is an information element for indicating a bitmap of eight bits for each frequency band.

Here, in a case where the "modifiedMPR-Behaviour" is not configured in the "RF-Parameters": the base station 10 may identify that the terminal 20 supports all of the NS values that are specified for the corresponding frequency band, and are explained with reference to FIG. 7 and FIG. 9; the base station 10 may determine that the terminal 20 supports all of the NS values; or the base station 10 may assume that the terminal 20 supports all of the NS values. The above "all of the NS values" may be NS values corresponding to a particular release version.

For example, in a case where the base station 10 receives a UE capability report in which the frequency band is "n8" and the "modifiedMPR-Behaviour" is not configured in the "RF-Parameters", the base station 10 may identify that the terminal 20 having transmitted the UE capability report, supports all of the "NR_01", "NR_100", "NR_43", and "NR_43U".

For example, in a case where the base station 10 receives a UE capability report in which the frequency band is "n258" and the "modifiedMPR-Behaviour" is not configured in the "RF-Parameters", the base station 10 may identify that the terminal 20 having transmitted the UE capability report, supports all of the "NR_200" and "NR_201".

According to the above embodiment, in a case where the terminal 20 does not transmit, to a network, information indicating whether an operation related to changed MPR in a certain frequency band is supported, the network can identify that the terminal 20 supports all of the one or multiple sets of requirements related to the spectrum emission in the frequency band. Therefore, it can be specified that, in the frequency band in which the specification of the MPR is not changed, the terminal 20 satisfies the requirements related to the spectrum emission.

In other words, the network can identify the terminal capability in the radio communication system.

### <Apparatus configuration>

Next, an example of functional configuration of the base station 10 and the terminal 20 that execute the processing and operations described so far will be described. The base station 10 and the terminal 20 include a function for implementing the above-described embodiment. However, each of the base station 10 and the terminal 20 may have only some of the functions in the embodiment.

### <Base station 10>

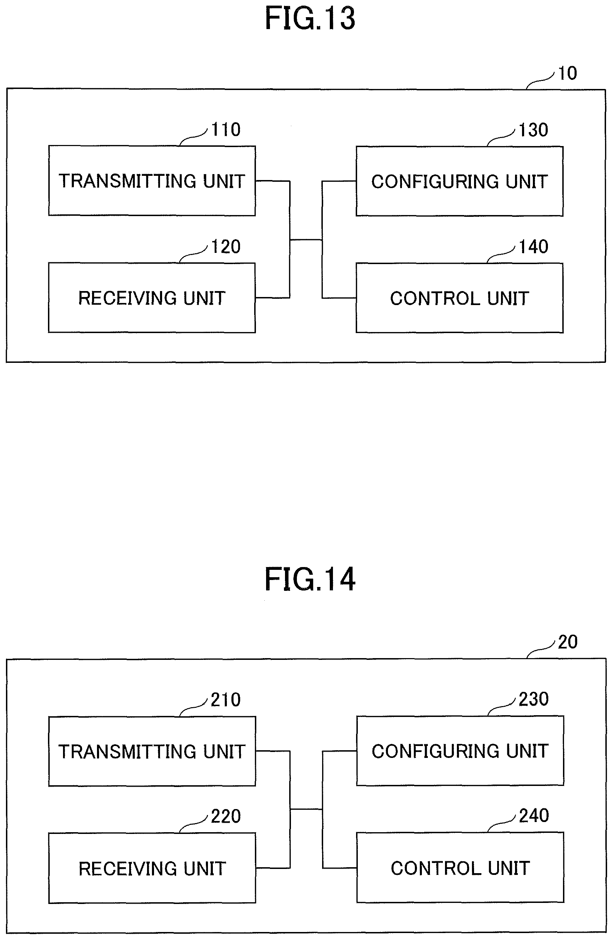

FIG. 13 is a drawing illustrating an example of a functional configuration of the base station 10. As illustrated in FIG. 13, the base station 10 includes a transmitting unit 110, a receiving unit 120, a configuring unit 130, and a control unit 140. The functional configuration illustrated in FIG. 13 is only an example. As long as the operation according to an embodiment of the present invention can be executed, the functions may be divided in any way, and the functional units may be given any names.

The transmitting unit 110 includes a function of generating signals to be transmitted to the terminal 20 and wirelessly transmitting the signals. Also, the transmitting unit 110 transmits an inter-network node message to another network node. The receiving unit 120 includes a function of receiving various types of signals transmitted from the terminal 20 and acquiring, for example, information on a higher layer from the received signals. Further, the transmitting unit 110 has a function of transmitting NR-PSS, NR-SSS, NR-PBCH, a DL/UL control signal, or the like to the terminal 20. Also, the receiving unit 120 receives an inter-network node message from another network node.

The configuring unit 130 stores configuration information configured in advance and various configuration information to be transmitted to the terminal 20. The contents of the configuration information include, for example, information and the like of transmission and reception configuration according to the UE capability of the terminal 20.

As described in the embodiment, the control unit 140 performs control of processing of UE capability report of radio parameters received from the terminal 20. Also, the control unit 140 indicates information related to spectrum emission to the terminal 20. A functional unit configured to transmit signals in the control unit 140 may be included in the transmitting unit 110, and a functional unit configured to receive signals in the control unit 140 may be included in the receiving unit 120.

### <Terminal 20>

FIG. 14 is a drawing illustrating an example of a functional configuration of the terminal 20 according to an embodiment of the present invention. As illustrated in FIG. 14, the terminal 20 includes a transmitting unit 210, a receiving unit 220, a configuring unit 230, and a control unit 240. The functional configuration illustrated in FIG. 14 is merely an example. As long as the operation according to an embodiment of the present invention can be executed, the functions may be divided in any way, and the function units may be given any names.

The transmitting unit 210 generates a transmission signal from transmission data and wirelessly transmit the transmission signal. The receiving unit 220 wirelessly receives various types of signals, and acquires a signal in a higher-layer from the received signal in the physical layer. Also, the receiving unit 220 has a function of receiving NR-PSS, NR-SSS, NR-PBCH, DL/UL/SL control signals, reference signals, and the like that are transmitted from the base station 10. Also, for example, in D2D communication, the transmitting unit 210 transmits, to another terminal 20, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like. The receiving unit 120 receives the PSCCH, the PSSCH, the PSDCH, the PSBCH, and the like, from the another terminal 20.

The configuring unit 230 stores various types of configuration information received from the base station 10 by the receiving unit 220. The configuring unit 230 also stores configuration information configured in advance. The contents of the configuration information include, for example, information and the like of transmission and reception configuration according to the UE capability..

As described in the embodiment, the control unit 240 performs control of processing of UE capability report of radio parameters received from the terminal 20. Also, the control unit 140 performs control related to spectrum emission. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 13 and 14) used for explaining the above embodiments illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

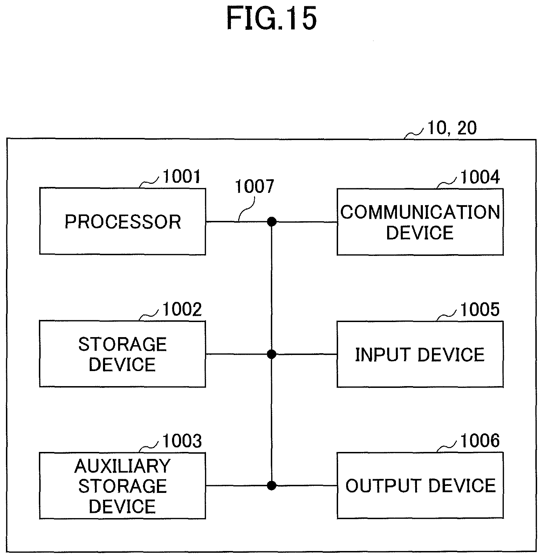

For example, the base station 10, the terminal 20, and the like according to one embodiment of the present disclosure may function as a computer that performs processing of a wireless communication according to the present disclosure. FIG. 15 is a drawing illustrating an example of a hardware configuration of the base station 10 or the terminal 20 according to an embodiment of the present disclosure. Each of the base station 10 and terminal 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station 10 and the terminal 20 may be configured to include one or more of the devices illustrated in drawings, or may be configured not to include some of the devices.

Each function of the base station 10 and the terminal 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station 10, as illustrated in FIG. 13, may be implemented by a control program that is stored in the storage device 1002 and that is executed by the processor 1001. Also, for example, the control unit 240 of the terminal 20, as illustrated in FIG. 14, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station 10 and the terminal 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to an embodiment of the present invention, provided is a terminal including a receiving unit configured to receive, from a base station, information for indicating one or a plurality of values indicating requirements related to spectrum emission in a frequency band, and information for requesting a report of a terminal capability, a control unit configured to support all values indicating the requirements related to the spectrum emission, in a case where the report does not include information indicating whether an operation of changed MPR (Maximum Power Reduction) in the frequency band is supported, and a transmitting unit configured to transmit the report to the base station.

According to the above configuration, in a case where the terminal 20 does not transmit, to a network, information indicating whether an operation of changed MPR in a certain frequency band is supported, the network can identify that the terminal 20 supports all of one or multiple sets of requirements related to the spectrum emission in the frequency band. Therefore, it can be specified that, in the frequency band in which the specification of the MPR is not changed, the terminal 20 satisfies the requirements related to the spectrum emission. In other words, the network can identify the terminal capability in the radio communication system.

According to an embodiment of the present invention, provided is a base station including a transmitting unit configured to transmit, to a terminal, information for indicating one or a plurality of values indicating requirements related to spectrum emission in a frequency band and information for requesting a report of a terminal capability, a receiving unit configured to receive the report from the terminal, and a control unit configured to determine that the terminal supports all values indicating the requirements related to the spectrum emission, in a case where the report does not include information indicating whether an operation of changed MPR (Maximum Power Reduction) in the frequency band is supported.

According to the above configuration, in a case where the terminal 20 does not transmit, to a network, information indicating whether an operation of changed MPR in a certain frequency band is supported, the network can identify that the terminal 20 supports all of one or multiple sets of requirements related to the spectrum emission in the frequency band. Therefore, it can be specified that, in the frequency band in which the specification of the MPR is not changed, the terminal 20 satisfies the requirements related to the spectrum emission. In other words, the network can identify the terminal capability in the radio communication system.

According to an embodiment of the present invention, provided is a communication method causing a terminal to execute the method including receiving of, from a base station, information for indicating one or a plurality of values indicating requirements related to spectrum emission in a frequency band and information for requesting a report of a terminal capability, supporting of all values indicating the requirements related to the spectrum emission, in a case where the report does not include information indicating whether an operation of changed MPR (Maximum Power Reduction) in the frequency band is supported, and transmitting of the report to the base station.

According to the above configuration, in a case where the terminal 20 does not transmit, to a network, information indicating whether an operation of changed MPR in a certain frequency band is supported, the network can identify that the terminal 20 supports all of one or multiple sets of requirements related to the spectrum emission in the frequency band. Therefore, it can be specified that, in the frequency band in which the specification of the MPR is not changed, the terminal 20 satisfies the requirements related to the spectrum emission. In other words, the network can identify the terminal capability in the radio communication system.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station 10 according to an embodiment of the present invention and software functioning with a processor of the terminal 20 according to an embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the indication of information is not limited to the aspect or embodiment described in the present disclosure, but may be performed by other methods. For example, the indication of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "terminal (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of terminals 20 (that may be called D2D (Device-to-Device), V2X (Vehicle-to-Everything), or the like). In this case, a terminal 20 may have above-described functions of the base station 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each terminal 20 to assign, in TTI units, radio resources (such as frequency bandwidths, transmission power, and the like that can be used by each terminal 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other". Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Indication of predetermined information (for example, indication of "being x") may be implemented not only explicitly but also implicitly (for example, by not indicating predetermined information).

In the present disclosure, the "UECapabilityEnquiry" is an example of information for requesting a report of terminal capability. The "UECapabilityInformation" is an example of a report of terminal capability. The NS value is an example of a value indicating a requirements related to spectrum emission. The AdditionalSpectrumEmission is an example of information for indicating a value indicating requirements related to spectrum emission. The modifiedMPR-Behaviour is an example of information indicating whether an operation of changed MPR is supported.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### Reference Signs List

- 10: base station
- 110: transmitting unit
- 120: receiving unit
- 130: configuring unit
- 140: control unit
- 20: terminal
- 210: transmitting unit
- 220: receiving unit
- 230: configuring unit
- 240: control unit
- 1001: processor
- 1002: storage device
- 1003: auxiliary storage device
- 1004: communication apparatus
- 1005: input device
- 1006: output device

## Claims

1. A terminal comprising:
a receiving unit configured to receive, from a base station,
information for indicating one or a plurality of values indicating requirements related to spectrum emission in a frequency band, and
information for requesting a report of a terminal capability;
a control unit configured to support all values indicating the requirements related to the spectrum emission, in a case where the report does not include information indicating whether an operation of changed MPR (Maximum Power Reduction) in the frequency band is supported; and
a transmitting unit configured to transmit the report to the base station.

2. A base station comprising:
a transmitting unit configured to transmit, to a terminal,
information for indicating one or a plurality of values indicating requirements related to spectrum emission in a frequency band, and
information for requesting a report of a terminal capability;
a receiving unit configured to receive the report from the terminal; and
a control unit configured to determine that the terminal supports all values indicating the requirements related to the spectrum emission, in a case where the report does not include information indicating whether an operation of changed MPR (Maximum Power Reduction) in the frequency band is supported.

3. A communication method causing a terminal to execute:
receiving of, from a base station,
information for indicating one or a plurality of values indicating requirements related to spectrum emission in a frequency band, and
information for requesting a report of a terminal capability;
supporting of all values indicating the requirements related to the spectrum emission, in a case where the report does not include information indicating whether an operation of changed MPR (Maximum Power Reduction) in the frequency band is supported; and
transmitting of the report to the base station.
